# EUROPEAN PATENT SPECIFICATION

(11) **EP 1 850 031 B1**
(45) Date of publication and mention of the grant of the patent: **05.11.2008**
(21) Application number: 07008111.2
(22) Date of filing: 20.04.2007
(51) Int. Cl.: F16G 13/06

(54) **Corrosion resistant roller chain**
Korrosionsfeste Rollenkette
Chaîne à rouleaux résistante à la corrosion

(30) Priority: 27.04.2006 JP 2006124114
(43) Date of publication of application: 31.10.2007
(73) Proprietor: Tsubakimoto Chain Co., Kita-ku Osaka 530-0005 (JP)
(72) Inventor: Murakami, Keisuke, Kita-ku Osaka 530-0005 (JP); Kobayashi, Kunito, Kita-ku Osaka 530-0005 (JP)
(74) Representative: Feldmeier, Jürgen

(56) References cited:
- EP-A- 0 602 265
- EP-A- 0 810 297
- WO-A-89/09844
- JP-A- 2005 249 042
- JP-A- 2006 145 005
- US-A- 5 785 166

## Description

### Field of the Invention

The present invention relates to roller chains, such as transmission roller chains, conveyance roller chains and the like, which resist corrosion and which can be used under a corrosive conditions such as saltwater, acid, alkali or the like.

### Background of the Invention

To prevent the corrosion of a roller chain by, for example, white rust (caused by chemical reactions with zinc galvanized coatings), the iron surfaces of the chain parts, before assembling the chain, may be coated with zinc under a nonhydrogen atmosphere and an aluminum powder and silicone resin paint may be baked on the zinc coating (see, for example, Japanese Laid-Open Patent Publication No. Hei. 9-317832, particularly, page 1 and Figure 1)).

Further, a corrosion resistant roller chain assembled and composed of a pair of right and left inner plates, a bush press-fitted between the inner plates, a pair of right and left outer plates disposed on both outer sides of the inner plates, and a connecting pin loosely penetrated through the bush and press-fitted between the outer plates has been previously taught. The roller chain assembly is characterized by a zinc-aluminum system alloy coating that is formed on one of the outer plates and the connecting pin before assembly of the chain. Additionally, a nickel system coating is formed on the other outer plate and connecting pin before assembly of the chain. Similarly, the zinc-aluminum system alloy coating is formed on one of the inner plates and the bush and the nickel system coating is formed on the other inner plate and bush before assembly of the chain (see, for example, Japanese Laid-Open Patent Publication No. 2005-249042, particularly, page 1 and Figure 1).

When a paint containing an aluminum powder and a silicone resin is baked on a zinc coating formed under a nonhydrogen atmosphere as described hereinabove, the paint baked at the pin press-fitted area, the fastening riveted area, and the bush fitted area is liable to peel off during assembling of the chain or during coupling/decoupling of plates in the chain. When the paint is damaged, the chain must be repaired by re-baking the paint. This process increases costs and increases the time needed for manufacturing the chain. In addition to being damaged during assembly, the coating may peel off during use of the chain. Further, the coated film may have varied film thicknesses, thereby resulting in uneven corrosion protection.

When the outer plates and inner plates are subjected only to a zinc-aluminum system alloy coating of a required Japanese Industrial Standard (JIS) coverage (e.g., a coverage of 350 g/m² yielding a film thickness of about 50 µm or more) (see, e.g., "JIS HB Metal Surface Treatment" by Japanese Standards Association, April 21, 1991), white rust is likely to occur on the outer plate, the inner plate or the like. This coating may be obtained by hot dipping according to JIS H 8641 (zinc hot dip galvanizing; see, e.g., "JIS HB Metal Surface Treatment" by Japanese Standards Association, April 21, 1991). The presence of white rust reduces the clearance between the outer plate and the inner plate, thereby reducing the flexibility of the chain. The rust may also be discharged and diffused outside the chain as dust, thereby getting the surrounding environment dirty and causing friction between surfaces. Further, when a bush is press-fitted into the inner plates subjected to a zinc-aluminum system coating of a required JIS coverage during the assembly of the chain, it is deformed to a barrel type and the zinc-aluminum system alloy coating of the required JIS coverage reduces the fitting pressure between the inner plate and the bush or the fitting pressure between the outer plate and the connecting pin. This may lead to a reduction in the endurance of the chain and increase the likelihood that the chain will be damaged. The above problems have been previously addressed by thinly coating the zinc-aluminum system alloy to less than required for JIS coverage. However, this solution leads to problems with reduced corrosion protection caused by the loss of the film thickness.

### Summary of the Invention

In accordance with one aspect of the instant invention, a corrosion resistant roller chain is provided which comprises a pair of right and left inner plates, a bush press-fitted between said inner plates, a roller loosely fitted on the bush, a pair of right and left outer plates disposed on both outer sides of the inner plates, and a connecting pin loosely penetrated through the bush and press-fitted between the outer plates, wherein the outer plates and inner plates comprise a zinc-aluminum system alloy coating which is thinner than required by JIS, and wherein the zinc-aluminum alloy is coated with a chemical conversion treatment.

In a particular embodiment, the bush and connecting pin comprise a nickel coating. The nickel coating may be applied before the assembly of the chain. The nickel coating may also be applied by electroless nickel plating.

In yet another embodiment, the roller comprises a zinc-aluminum system alloy coating which is thinner than is required by JIS and a chemical conversion coating. Preferably, the coatings are added before the chain is assembled. The zinc-aluminum alloy coating may be added by hot dipping. The chemical conversion coating may be added by lamination.

In another embodiment, the roller may comprise a nickel coating. The nickel coating may be added before assembly and may be added by electroless nickel plating.

### Brief Description of the Drawings

Figure 1 is an exploded view for assembly of a corrosion protective roller chain according to the present invention.

Figure 2 is a partially enlarged cross-sectional view of the corrosion protective roller chain shown in Figure 1, with circled parts further enlarged in Figs. 2X, 2Y and 2Z.

### Detailed Description of the Invention

The present invention provides a corrosion resistant roller chain which retains its corrosion resistant propertied for a long period of time under corrosive atmospheres such as saltwater, acid, alkali, and the like. Furthermore, the roller chain has improved endurance at an inexpensive manufacturing cost by reducing the frequency of chain failures due to inflexibility caused by white rust buildup and by reducing the peeling off of the coating on the pin press-fitted areas and the bush fitted areas during the use and/or assembly of the chain. Additionally, the chain of the instant invention can be colored black.

The corrosion resistant roller chain of the instant invention may comprise a pair of right and left inner plates, a bush press-fitted between the inner plates, a roller loosely fitted on the bush, a pair of right and left outer plates disposed on both outer sides of the inner plates, and a connecting pin loosely penetrated through the bush and press-fitted between the outer plates. The outer plates and inner plates may be subjected to a zinc-aluminum system alloy coating by hot-dipping before assembly of the chain. The zinc-aluminum coating may be thinner than required by JIS coverage. For example, the zinc-aluminum system alloy coating may be less than 350 g/m² (i.e., a film thickness of about 50 µm or more). The coating formed by JIS H 8641 forms an integrated alloy layer of diffused zinc from the zinc-aluminum system coating and iron from the iron base material at the interface between the zinc-aluminum system coating and the outer plate and the inner plate. The adhesion properties of the zinc-aluminum system alloy coating with the iron is superior. Accordingly, peeling of the zinc-aluminum system alloy coating from the iron does not occur at pin press-fitted areas of the outer plate and bush fitted areas of the inner plate during assembly of the chain and during coupling and decoupling of the chain, in contrast to other coatings. Additionally, even if a flaw occurs at a pin fastening riveted area of the outer plate where coating peeling often occurs and the iron of the outer plate is exposed for a long period of time, rust does not form due to the electrochemical protection due to the ionizing of peripheral zinc. This effect is sometimes referred to as sacrificing corrosion-preventive action of zinc-aluminum system alloy coating. These corrosion preventive effects of the instant invention withstand corrosive conditions such as saltwater, acid, alkali, and the like for a long period of time.

Inasmuch as the outer plate and the inner plate are subjected to a thinner film of zinc-aluminum system alloy coating than provided with a coverage of 350 g/m² (film thickness of about 50 µm or more) as specified by JIS H 8641, the clearance between the outer plate and the inner plate is ensured. Thus, the chain retains full flexibility and, as an effect, the chain has high endurance, at an inexpensive manufacturing cost.

The outer plate and the inner plate of the chain may also be subjected to a chemical conversion coating. The coating may be by chemical conversion treatment in a laminated state, thereby resulting in the chemical conversion coating completely covering the zinc-aluminum system coating. The chemical conversion coating further protects against the generation of rust on the outer plate or the inner plate. Furthermore, the chemical conversion treatment allows for the chain to be colored, such as black. For example, the outer plate and inner plate may be dipped into an alkaline aqueous solution, thereby producing black coloring which can increase the commercial value of the chain.

The bush and connecting pin may be subjected to a nickel coating before the assembly of the chain. The nickel coating can be performed by electroless nickel plating. This increases the hardness of the bush and the connecting pin so that they are more resistant to wear.

As stated hereinabove, the adhesion properties of the zinc-aluminum system alloy coating specified by JIS H 8641 with the iron material of the chain components is improved as the diffused zinc from the zinc-aluminum system alloy coating and diffused iron from the iron basic material form an interface between the zinc-aluminum system alloy coating and the iron basic material of the roller. Therefore, in contrast to conventional chains, peeling of the zinc-aluminum system alloy coating does not occur at the inner circumferential surfaces of a roller opposed to the bush or at the outer circumferential surface of the roller, which comes into contact with a chain guide or the like during the use of the chain. Inasmuch as the coating integrity is maintained, the high corrosion resistant properties of the chain are maintained under corrosion conditions such as saltwater, acid, alkali or the like for a long period of time. Furthermore, the roller comprises a zinc-aluminum system alloy coating that is thinner than a coverage of 350 g/m² (film thickness of about 50 µm or more) as specified by JIS H 8641. As such, the clearance between the bush and the inner circumferential surface of the roller is ensured, thereby allowing for smooth rolling travel of the roller. Additionally, the chemical conversion coating by chemical conversion treatment completely covers the zinc-aluminum system alloy coating, thereby preventing the generation of rust which may occur in a zinc-aluminum system alloy coating of the roller.

The roller may also be subjected to a nickel coating, such as by electroless nickel plating, before an assembly of the chain.

The roller chain of the instant invention: 1) is corrosion resistant under corrosive conditions such as saltwater, acid, alkali, or the like; 2) exhibits corrosion resistance for a long period of time; 3) prevents peeling of the coatings at pin press-fitted areas and bush fitted areas at the time of assembly of the chain, at the time of coupling or decoupling of the chain and at the time of use of the chain; and 4) reduces the occurrence of failures of the chain during use due to a loss in flexibility. The chain of the instant invention also possesses improved endurance at an inexpensive manufacturing cost.

The corrosion resistant roller chain may comprise a pair of right and left inner plates, a bush press-fitted between the inner plates, a roller loosely fitted on the bush, a pair of right and left outer plates disposed on both outer sides of the inner plates, and a connecting pin loosely penetrated through the bush and press-fitted between the outer plates. The outer plates and inner plates may be subjected to a zinc-aluminum system alloy coating by hot-dipping to create a thinner film thickness than required by JIS coverage and then subjected to chemical conversion coating by chemical conversion treatment by lamination.

The zinc-aluminum system alloy used for plating the outer plates, inner plates, rollers and the like, comprises at least zinc and aluminum. The zinc-aluminum system alloy may comprise additional elements such as magnesium and silicon. For example, a three element system alloy comprising zinc, aluminum, and magnesium or a four element system alloy comprising zinc, aluminum, magnesium, and silicon alloy may be used for plating. The presence of additional elements may further improve the corrosion resistant properties of the chain.

The thickness of the zinc-aluminum system alloy coating on the outer plates, the inner plates and rollers in the present invention may be thinner than the coverage of 350 g/m² (film thickness of about 50 µm or more) specified by JIS H 8641. In a preferred embodiment, the coat thickness is about 10 to about 40 µm.

Furthermore, electroless nickel plating may used for the outer plates, the inner plates and rollers in the present invention. Nickel plating may comprise, without limitation, any one of the group consisting of nickel, nickel-phosphorus alloy, nickel-boron alloy, nickel-phosphorus-boron alloy, and nickel-phosphorus-PTFE composite alloy. The electroless nickel plating increases the hardness of the chain, thereby increasing the wear resistance of the chain.

Chemical conversion treatment may be used on the outer plates, the inner plates and rollers in the present invention. Inorganic/organic system (e.g., silane system, tannin system) chemical conversion treatments may be used. For example, any phosphate treatment wherein the plates are dipped into a zinc phosphate- or manganese phosphate aqueous solution may be used to prevent rust. Additionally, black coloring may be added by dipping the plates in an alkaline aqueous solution. In a particular embodiment, the black coloring is of a calm or subtle tone, which can increase the commercial value of the chain.

However, it should be noted that it is preferable to avoid dipped into aqueous solution containing chromic acid or dichromic acid to cover the objects with chromium oxide because chromium is toxic and presents issues with regard to environmental regulation such as RoHS regulations and the like.

The following example describes illustrative methods of practicing the instant invention and is not intended to limit the scope of the invention in any way.

### Example

A representative corrosion preventive roller chain of the present invention is described hereinbelow.

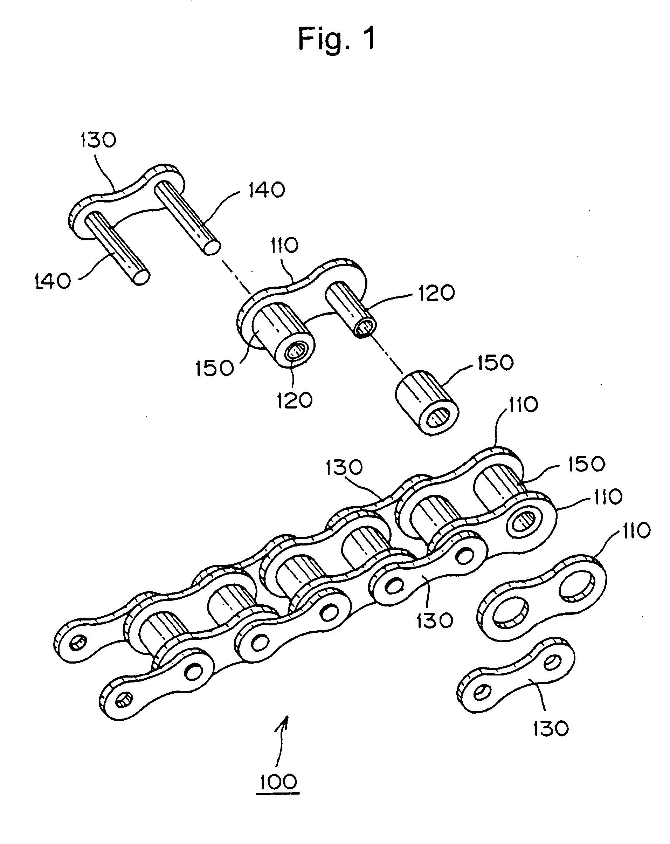

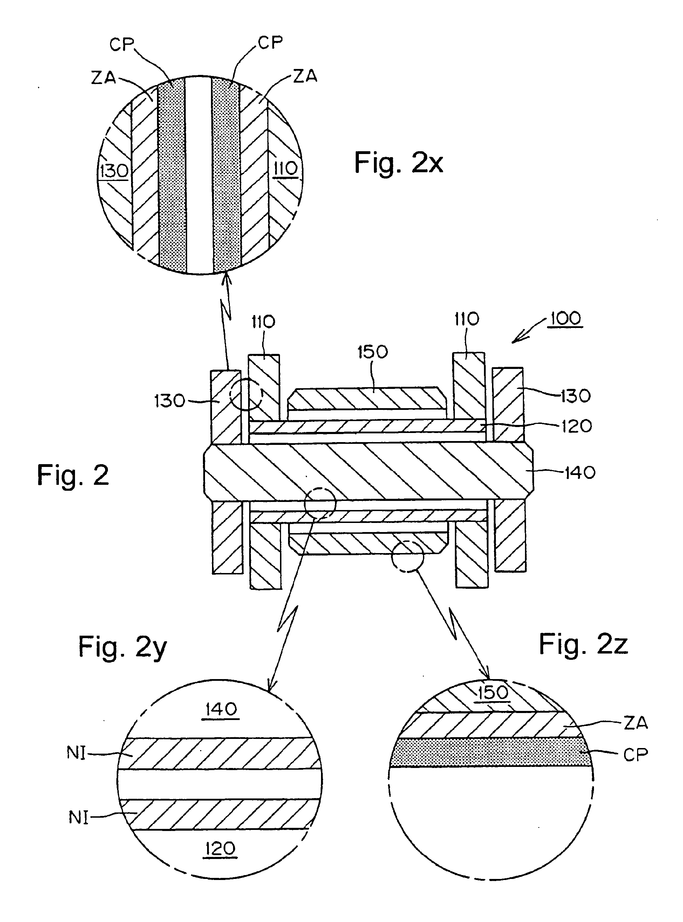

Figure 1 is an exploded view of the assembly of a roller chain according to the present invention which is corrosion resistant. Figure 2 is a partially enlarged cross-sectional view of the corrosion protective roller chain shown in Figure 1.

First, a corrosion resistant roller chain **100** of the present example is assembled by connecting chain units in a longitudinal direction of the chain. Each chain unit comprises a pair of right and left inner plates **110, 110**; a bush **120** press-fitted between the inner plates **110, 110**; a pair of right and left outer plates **130, 130** disposed on both outer sides of the inner plates **110, 110**; connecting pin **140** penetrated through the bush **120** and press-fitted between the outer plates **130, 130**; and a roller loosely fitted on an outer circumferential surface of the bush **120**. Further, in the corrosion resistant roller chain **100**, slide contact rotation may be performed under high surface pressure between the bush **120** and the connecting pin **140** and between the bush **120** and the roller **150** during the use of the chain.
The iron surfaces of the inner plate **110** and the outer plate **130** are coated with a zinc-aluminum system alloy (**ZA**) by hot dipping at a thickness lower than required by JIS. Specifically, a film thickness about 15 µm is used, which is thinner than the coverage of 350 g/m² (film thickness of about 50 µm or more) specified by JIS H 8641. The zinc-aluminum system alloy coating is covered by a chemical conversion coating (**CP**) of a film thickness of 5 µm or less by chemical conversion treatment in a laminated state. The conversion coating uninterruptedly covers the zinc-aluminum system alloy coating.

The zinc-aluminum system alloy coating **ZA** forms an integrated alloy layer obtained by zinc and iron diffused at an interface between the zinc-aluminum system alloy coating **ZA** and the iron base material of the inner plate **110** and the outer plate **130**. The alloy layer improves the adhesion properties with the iron base material. As such, peeling of the zinc-aluminum system alloy coating **ZA** does not occur at the bush fitted area of the inner plate **110** or the pin press-fitted area of the outer plate **130**, either during assembly of the chain or during coupling and decoupling of the chain, in contrast to conventional chains. Further, even if a flaw occurs at a pin fastening riveted area of the outer plate **130**, where peeling of the coating most frequently occurs, and the iron base material is exposed for a significant period of time, the generation of rust is prevented by electromagnetic protection due to ionization by the surrounding zinc. This effect may be referred to as a sacrificial action of the zinc-aluminum system alloy coating **ZA**. These properties allow for sustained protection against corrosion preventive even under corrosive conditions such as saltwater, acid, alkali or the like.

The clearance between the inner plate **110** and the outer plate **130** can be ensured by the use of the thin film of zinc-aluminum system coating **ZA** of about 15 µm. Smooth flexing of the chain can be ensured by maintaining the clearance and can be realized at an inexpensive manufacturing cost.

The chemical conversion coating **CP** in the present example is formed by phosphate treatment in which objects are dipped into zinc phosphate- or manganese phosphate aqueous solution for rust prevention. A chemical conversion coating **CP** of a film thickness of 5 µm or less is formed as a laminate. The chemical conversion coating **CP** completely covers the zinc-aluminum system alloy coating **ZA**, thereby preventing the generation of white rust on the zinc-aluminum system alloy coating **ZA** of the inner plate **110** and the outer plate **130**.

The iron base material surface of a roller **150** is subjected to thin filmed zinc-aluminum system alloy coating **ZA** by hot dipping to form a film thickness of about 15 µ m as on such surfaces as the inner plate **110** and the outer plate **130**. The plates are subsequently subjected to a chemical conversion coating **CP** of a film thickness of 5 µm or less by chemical conversion treatment before assembly of the chain.

The zinc-aluminum system alloy coating **ZA** forms an integrated alloy layer obtained by diffused zinc from the zinc-aluminum system alloy coating **ZA** and diffused iron from the iron base material of the roller **150** at their interface, whereby the adhesion properties of the zinc-aluminum system alloy coating **ZA** with the iron base material is improved. As such, peeling of the zinc-aluminum system alloy coating **ZA** does not occur, in contrast to conventional chains, at an inner circumferential surface of a roller opposed to the bush **120** and at an outer circumferential surface of a roller, which contacts with a chain guide or the like during the use of the chain. The lack of peeling allows for the retention of the anti-corrosion properties under corrosive conditions such as saltwater, acid, alkali or the like for a long period of time. Inasmuch as the roller, before assembly of the chain, comprises a thin film of the zinc-aluminum system alloy coating **ZA** of a thickness of about 15 µm, the clearance between a bush **120** and an inner circumferential surface of the roller **150** is maintained and a smooth rolling travel of the roller **150** is achieved. Further, since a chemical conversion coating **CP** by chemical conversion treatment covers the zinc-aluminum system alloy coating **ZA**, the generation of rust in the zinc-aluminum system alloy coating **ZA** of the roller **150** is suppressed.

Additionally, the iron surfaces of the bush **120** and the connecting pin **140** can be subjected to a nickel coating **Nl** by electroless nickel plating before assembly of the chain. The process increases the hardness of the bush **120** and the connecting pin **140**, thereby increasing the wear resistance of the entire chain. The thickness of the nickel coating **Nl** is preferably about 10 to about 15 µm.

It is noted that as a basic material of the inner plate **110**, the outer plate **130**, and the roller **150** in the present example, tough steel subjected to hardening and subsequently to tempering at high temperature of 400 to 500°C may be used. Thus, it is preferred that formation of the zinc-aluminum system alloy **ZA** is performed at a treatment temperature of 450°C or less so as not to lose the high temperature tempering effect.

Additionally, carburized steel is subjected to tempering at a lower temperature of 150 to 250°C. After carburization is used for the bush **120** and the connecting pin **140** as the basic iron material, it is preferred that coating at a low treatment temperature is adapted so as to not lose the low temperature tempering effect.

It is noted that although, in the above-descried example, a roller subjected to a thin filmed zinc-aluminum system alloy coating **ZA** is subjected to a chemical conversion coating **CP** of a film thickness of 5 µm or less, the same corrosion preventive effect can be obtained even by being subjected to a nickel coating **Nl** of a film thickness of about 10 to about 15 µm by, e.g., electroless nickel plating.

In the corrosion resistant roller chain **100** of the present invention, the outer plate **110** and the inner plate **130** are subjected to a zinc-aluminum system alloy coating by hot-dipping to form a thin film and then subjected to chemical conversion coating **CP** by chemical conversion treatment in a laminated state before assembly of the chain. The corrosion resistant roller chain **100** of the present invention can exhibit the high corrosion prevention effect for a long period of time under corrosive conditions such as saltwater, acid, alkali or the like and can improve endurance of the chain at an inexpensive manufacturing cost by reducing failure of the chain due to inflexibility. Further, the coating at a pin press-fitted area and a bush fitted area do not peel off during the use of the chain.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

Documents are cited in the foregoing specification in order to describe the state of the art to which this invention pertains. The entire disclosure of each of these citations is incorporated by reference herein.

## Claims

1. A corrosion resistant roller chain (100) comprising a pair of right and left inner plates (110), a bush (120) press-fitted between said inner plates (110), a roller (150) loosely fitted on said bush (120), a pair of right and left outer plates (130) disposed on both outer sides of said inner plates (110), and a connecting pin (140) loosely penetrated through said bush (120) and press-fitted between said outer plates (130),
wherein said outer plates (130) and said inner plates (110) comprise a zinc-aluminum system alloy coating (ZA) which is thinner than is required by Japanese Industrial Standard (JIS), and
wherein said outer plates (130) and said inner plates (110) comprise a chemical conversion coating (CP) which covers said zinc-aluminum system alloy coating (ZA).

2. The corrosion resistant roller chain (100) according to claim 1, wherein said bush (120) and said connecting pin (140) comprise a nickel coating (NI).

3. The corrosion resistant roller chain (100) according to claim 1 or 2, wherein said roller (150) comprises a zinc-aluminum system alloy coating (ZA) which is thinner than required by JIS, and wherein said roller (150) comprises a chemical conversion coating (CP) which covers said zinc-aluminum system alloy coating (ZA).

4. The corrosion resistant roller chain (100) according to claim 1 or 2, wherein said roller (150) comprises a nickel coating.

5. The corrosion resistant roller chain (100) according to any of claims 1 to 4, wherein said zinc-aluminum system alloy coating (ZA) is about 10 to about 40 µm thick.

6. The corrosion resistant roller chain (100) according to any of claims 1 to 5, wherein said chemical conversion coating (CP) is about 5 µm thick or less.

7. The corrosion resistant roller chain (100) according to claim 2, wherein said nickel coating (NI) is about 10 to about 15 µm thick.

8. The corrosion resistant roller chain (100) according to any of claims 1 to 7, wherein said conversion coating (CP) uninterruptedly covers the zinc-aluminum system alloy coating (ZA).

## Patentansprüche

1. Eine korrosionsbeständige Rollenkette (100), die ein Paar aus rechter und linker innerer Platte (110), eine zwischen den inneren Platten (110) presseingepasste Buchse (120), eine auf der Buchse (120) lose befestigte Rolle (150), ein Paar aus rechter und linker äußerer Platte (130), die an beiden äußeren Seiten der inneren Platten (110) angeordnet sind, und einen Verbindungsstift (140), der die Buchse (120) lose durchdringt und zwischen den äußeren Platten (130) presseingepasst ist, aufweist,
wobei die äußeren Platten (130) und die inneren Platten (110) eine Beschichtung (ZA) aus einer Zink-Aluminiumsystemlegierung aufweisen, die dünner ist, als durch die japanische Industrienorm (JIS, Japanese Industrial Standard) gefordert ist, und
wobei die äußeren Platten (130) und die inneren Platten (110) eine chemische Umsatzbeschichtung (CP) aufweisen, die die Beschichtung (ZA) aus Zink-Aluminiumsystemlegierung bedeckt.

2. Die korrosionsbeständige Rollenkette (100) gemäß Anspruch 1, wobei die Buchse (120) und der Verbindungsstift (140) eine Nickelbeschichtung (NI) aufweisen.

3. Die korrosionsbeständige Rollenkette (100) gemäß Anspruch 1 oder 2, wobei die Rolle (150) eine Beschichtung (ZA) aus Zink-Aluminiumsystemlegierung aufweist, die dünner ist, als von der JIS gefordert, und wobei die Rolle (150) eine chemische Umsatzbeschichtung (CP) aufweist, die die Beschichtung (ZA) aus Zink-Aluminiumsystemlegierung bedeckt.

4. Die korrosionsbeständige Rollenkette (100) gemäß Anspruch 1 oder 2, wobei die Rolle (150) eine Nickelbeschichtung aufweist.

5. Die korrosionsbeständige Rollenkette (100) gemäß einem der Ansprüche 1 bis 4, wobei die Beschichtung (ZA) aus Zink-Aluminiumsystemlegierung ungefähr 10 bis 40 µm dick ist.

6. Die korrosionsbeständige Rollenkette (100) gemäß einem der Ansprüche 1 bis 5, wobei die chemische Umsatzbeschichtung (CP) ungefähr 5 µm oder weniger dick ist.

7. Die korrosionsbeständige Rollenkette (100) gemäß Anspruch 2, wobei die Nickelbeschichtung (NI) ungefähr 10 bis 15 µm dick ist.

8. Die korrosionsbeständige Rollenkette (100) gemäß einem der Ansprüche 1 bis 7, wobei die Umsatzbeschichtung (CP) die Beschichtung (ZA) aus Zink-Aluminiumsystemlegierung ununterbrochen bedeckt.

## Revendications

1. Chaîne à rouleaux résistante à la corrosion (100) comprenant une paire de plaques internes droite et gauche (110), une douille (120) ajustée avec serrage entre lesdites plaques internes (110), un rouleau (150) ajusté de manière desserrée sur ladite douille (120), une paire de plaques externes droite et gauche (130) disposées sur les deux côtés externes desdites plaques internes (110), et un axe de raccordement (140) introduit de manière desserrée à travers ladite douille (120) et ajusté avec serrage entre lesdites plaques externes (130),
dans laquelle lesdites plaques externes (130) et lesdites plaques internes (110) comprennent un revêtement en alliage de zinc-aluminium (ZA) qui est plus mince que ce qui est requis selon la Norme Industrielle Japonaise (JIS), et
dans laquelle lesdites plaques externes (130) et lesdites plaques internes (110) comprenant un revêtement de conversion chimique (CP) qui couvre ledit revêtement en alliage de zinc-aluminium (ZA).

2. Chaîne à rouleaux résistante à la corrosion (100) selon la revendication 1, dans laquelle ladite douille (120) et ledit axe de raccordement (140) comprennent un revêtement au Nickel (Ni).

3. Chaîne à rouleaux résistante à la corrosion (100) selon la revendication 1 ou 2, dans laquelle ledit rouleau (150) comprend un revêtement en alliage de zinc-aluminium (ZA) qui est plus mince que ce qui est requis par la JIS, et dans laquelle ledit rouleau (150) comprend un revêtement de conversion chimique (CP) qui couvre ledit revêtement en alliage de zinc-aluminium (ZA).

4. Chaîne à rouleaux résistante à la corrosion (100) selon la revendication 1 ou 2, dans laquelle ledit rouleau (150) comprend un revêtement au Nickel.

5. Chaîne à rouleaux résistante à la corrosion (100) selon l'une quelconque des revendications 1 à 4, dans laquelle ledit revêtement en alliage de zinc-aluminium (ZA) est d'une épaisseur d'environ 10 à environ 40 µm.

6. Chaîne à rouleaux résistante à la corrosion (100) selon l'une quelconque des revendications 1 à 5, dans laquelle ledit revêtement de conversion chimique (CP) est d'une épaisseur de 5µm ou moins.

7. Chaîne à rouleaux résistante à la corrosion (100) selon la revendication 2, dans laquelle ledit revêtement au Nickel (Ni) a une épaisseur d'environ 10 à environ 15 µm.

8. Chaîne à rouleaux résistante à la corrosion (100) selon l'une quelconque des revendications 1 à 7, dans laquelle ledit revêtement de conversion (CP) couvre sans interruption le revêtement en alliage de zinc-aluminium (ZA).
